# EUROPEAN PATENT SPECIFICATION

(11) **EP 1 903 087 B1**
(45) Date of publication and mention of the grant of the patent: **31.12.2008**
(21) Application number: 07018293.6
(22) Date of filing: 18.09.2007
(51) Int. Cl.: C09J 183/04, C08K 3/26

(54) **Two part adhesive for silicone rubber which cures by addition reaction**
Zweiteiliges, durch Additionsreaktion härtendes Haftmittel für Silicongummi
Adhésif en deux parties pour caoutchouc en silicone avec traitements par réaction d'addition

(30) Priority: 19.09.2006 JP 2006252017
(43) Date of publication of application: 26.03.2008
(73) Proprietor: Shin-Etsu Chemical Co., Ltd., Tokyo (JP)
(72) Inventor: Iwata, Mitsuhiro c/o Silicone-Electrics Materials Research Center, Annaka-shi, Gunma-ken, (JP)
(74) Representative: Merkle, Gebhard

(56) References cited:
- EP-A- 1 816 167
- US-A1- 2006 014 896

## Description

### TECHNICAL FIELD

This invention relates to an adhesive for a silicone rubber which cures by addition reaction, and more specifically, to a two part adhesive for a silicone rubber which contains a calcium carbonate powder and cures by hydrosilylation.

### BACKGROUND ART

A silicone rubber composition containing a calcium carbonate powder which cures by hydrosilylation has suffered from the problem of hydrogen gas generation during its storage since the calcium carbonate powder contained an alkaline component as its impurity. More specifically, this alkaline impurity reacted with the organopolysiloxane containing hydrogen atoms bonded to the silicon atom which had been incorporated in the composition as the curing agent. In order to solve this problem, JP-A 10-60281 (Patent Document 1), for example, proposes a silicone rubber composition containing a diorganopolysiloxane having at least two alkenyl groups per molecule, an organopolysiloxane having at least two hydrogen atoms bonded to the silicon atom per molecule, a platinum group metal catalyst, a calcium carbonate powder having its surface treated with a hydrolysis and condensation product of a tetraalkoxysilane. JP-A 2002-38016 corresponding to USP 6,613,440 and JP-A 2002-285130 corresponding to USP 6,811,650 (Patent Documents 2 and 3) propose a silicone rubber composition comprising a diorganopolysiloxane having at least two alkenyl groups per molecule, a calcium carbonate powder having its surface treated substantially with a diorganopolysiloxane, an organopolysiloxane having at least two hydrogen atoms bonded to the silicon atom per molecule, and a platinum group metal catalyst.

In addition, it has been a common technique to constitute the silicone rubber composition which cures by hydrosilylation as a two part composition. In this case, the two parts are separately stored and mixed immediately before its use for curing. Patent Document 3 proposes production of such two part silicone rubber composition which cures by hydrosilylation containing a calcium carbonate powder. Patent Document 1 proposes a two part composition comprising the composition containing a diorganopolysiloxane containing at least two alkenyl groups per molecule, a platinum group metal catalyst, and a calcium carbonate powder having its surface treated with a partial hydrolysis and decomposition product of a tetraalkoxysilane; and the composition containing a diorganopolysiloxane having at least two alkenyl groups per molecule and an organopolysiloxane having at least two hydrogen atoms bonded to silicon atom per molecule. Patent Document 2 proposes a two part product comprising the silicone rubber base substantially comprising a diorganopolysiloxane having at least two alkenyl group per molecule and a calcium carbonate powder having its surface treated with a diorganopolysiloxane; and a mixture separately prepared by kneading an organopolysiloxane having at least two hydrogen atoms bonded to the silicon atom per molecule, a platinum group metal catalyst, and optionally a tackifier.

However, if the silicone rubber composition containing a surface treated calcium carbonate powder were simply produced as a two part product as in the case of conventional silicone rubber compositions which cure by hydrosilylation, and viscosity of the two parts were balanced by incorporating the surface treated calcium carbonate powder in the composition containing the curing agent, the product suffered from various problems. For example, strong thixotropy developed during the storage, and homogeneous mixing at a substantially equivalent volume ratio by a static mixing apparatus such as static mixer became difficult due to the increase in the viscosity. In addition, the silicone rubber obtained by mixing the two parts after the storage failed to exhibit the designed physical properties of the silicone rubber or the designed adhesion to the silicone rubber. When the two part product was prepared in the form of a two part adhesive comprising the composition containing the calcium carbonate powder and the composition containing the curing agent as in the case of the proposals as mentioned above, homogeneous mixing at a substantially equivalent volume ratio by a static mixing apparatus such as static mixer was difficult due to the great difference in the viscosity between the two parts. In addition, the resulting silicone rubber failed to show the designed physical properties of the silicone rubber or the designed adhesion to the silicone rubber.

### DISCLOSURE OF THE INVENTION

The present invention has been completed in view of the situation as described above, and an object of the present invention is to provide an adhesive for a silicone rubber comprising a two part silicone rubber composition which cures by addition reaction (hydrosilylation) containing calcium carbonate powder, wherein the two parts can be stored for a prolonged period with reduced change in the viscosity of the composition containing the curing agent; and the two parts can be homogeneously mixed at a substantially equivalent volume ratio by a static mixing apparatus such as static mixer; and once cured, the composition exhibits the designed physical properties of the silicone rubber and adhesion to the silicone rubber.

In order to realize such objects, the inventors of the present invention made an intensive study and found that when a two part adhesive for a silicone rubber is prepared such that the adhesive comprises composition (I) and composition (II) so that the adhesive cures by addition reaction when the composition (I) and the composition (II) are mixed at substantially equivalent volume ratio at room temperature, and the adhesive comprises the components (A) to (E) as described below with the composition (I) comprising the component (A), the component (C), the component (E), and optionally the component (D) without containing the component (B), and the composition (II) comprising the component (A), the component (B), and the component (D) without containing the component (C) and the component (E); the two parts can be stored for a long time with small change in the viscosity of the composition containing the curing agent; and the compositions (I) and (II) can be homogeneously mixed at a substantially equivalent volume ratio by a static mixing apparatus such as static mixer; and once cured, the composition exhibits the designed physical properties of the silicone rubber and adhesion to the silicone rubber.

Accordingly, the present invention provides a two part adhesive for a silicone rubber comprising composition (I) and composition (II) which cures by addition reaction when the composition (I) and the composition (II) are mixed at room temperature preferably at a volume ratio of 1 : 0.5 to 1 : 2, wherein
the adhesive comprises
(A) 100 parts by weight of a diorganopolysiloxane containing at least two alkenyl groups per molecule on average;
(B) an organopolysiloxane containing at least two hydrogen atoms bonded to the silicon atom per molecule on average at an amount such that molar ratio of the hydrogen atom bonded to the silicon atom to the alkenyl group in the component (A) is in the range of 0.01 to 20;
(C) 1 to 200 parts by weight of a calcium carbonate powder having its surface treated with a paraffin compound;
(D) 1 to 200 parts by weight of an inorganic powder of at least one member selected from quartz, aluminum hydroxide, diatomaceous earth, alumina, titanium dioxide, zinc oxide, iron oxide, magnesium carbonate, and carbon black; and
(E) a catalytic amount (amount capable of promoting the curing of the composition) of a hydrosilylation catalyst; and the composition (I) comprises the component (A), the component (C), the component (E), and optionally the component (D) without containing the component (B); and the composition (II) comprises the component (A), the component (B), and the component (D) without containing the component (C) and the component (E).

### EFFECTS OF THE INVENTION

The two part adhesive for a silicone rubber which cures by addition reaction of the present invention contains a calcium carbonate powder, and when the two parts of the two part silicone rubber composition which cures by hydrosilylation are stored for a prolonged period, the composition containing the curing agent experiences a reduced change in the viscosity, and therefore, these two parts can be homogeneously mixed at a volume ratio of approximately 1 : 1 by a static mixing apparatus such as static mixer. Once cured, the composition of the present invention exhibits the designed physical properties of the silicone rubber and adhesion to the silicone rubber.

### DESCRIPTION OF THE PREFERRED EMBODIMENTS

The two part adhesive for a silicone rubber which cures by addition reaction according to the present invention comprises composition (I) and composition (II), and it cures when the composition (I) and the composition (II) are mixed at room temperature. The two part adhesive comprises at least
(A) 100 parts by weight of a diorganopolysiloxane containing at least two alkenyl groups per molecule on average;
(B) an organopolysiloxane containing at least two hydrogen atoms bonded to the silicon atom per molecule on average at an amount such that molar ratio of the hydrogen atom bonded to the silicon atom to the alkenyl group in the component (A) is in the range of 0.01 to 20;
(C) 1 to 200 parts by weight of a calcium carbonate powder having its surface treated with a paraffin compound;
(D) 1 to 200 parts by weight of an inorganic powder of at least one member selected from quartz, aluminum hydroxide, diatomaceous earth, alumina, titanium dioxide, zinc oxide, iron oxide, magnesium carbonate, and carbon black; and
(E) a catalytic amount (amount capable of promoting the curing of the composition) of a hydrosilylation catalyst.

The component (A) is the main component of the silicone rubber composition, and the component (A) comprises a diorganopolysiloxane containing at least two alkenyl groups per molecule on average. Examples of the alkenyl group in the component (A) include vinyl group, allyl group, butenyl group, pentenyl group, hexenyl group, and heptenyl group, and the preferred is vinyl group. Examples of the organic group in the component (A) other than the alkenyl group which binds to the silicon atom include optionally halogenated monovalent hydrocarbon groups containing about 1 to 10 carbon atoms, and preferably about 1 to 8 carbon atoms not including an aliphatic unsaturated bond, for example, alkyl groups such as methyl group, ethyl group, propyl group, butyl group, pentyl group, hexyl group, isopropyl group, isobutyl group, tert-butyl group, and cyclohexyl group; aryl groups such as phenyl group, tolyl group, and xylyl group; and halogenated alkyl groups such as 3-chloropropyl group and 3,3,3-trifluoropropyl group, and the preferred are methyl group and phenyl group. The component (A) typically has a substantially straight chain molecular structure comprising the backbone of repeated diorganosiloxane units having both ends endcapped with a triorganosiloxy group. However, the molecule may partly include a branched structure to the extent that the benefits of the present invention are not adversely affected. The component (A) is not particularly limited for its viscosity. The viscosity at 25°C is preferably in the range of 100 to 1,000,000 mPa·s, and more preferably 100 to 500,000 mPa·s. In the present invention, the viscosity is the one measured by a rotary viscometer.

Examples of the diorganopolysiloxane used for the component (A) include dimethylpolysiloxane having both ends endcapped with dimethylvinylsiloxy group, dimethylsiloxane - methylvinylsiloxane copolymer having both ends endcapped with dimethylvinylsiloxy group, dimethylsiloxane - vinyl copolymer having both ends endcapped with trimethylsiloxy group; a diorganopolysiloxane having all or a part of its methyl group substituted with an alkyl group such as ethyl group and propyl group, an aryl group such as phenyl group and tolyl group, or a halogenated alkyl group such as 3,3,3-trifluoropropyl group; a diorganopolysiloxane having all or a part of its vinyl group substituted with an alkenyl group such as allyl group and propenyl group; and a mixture of two or more such diorganopolysiloxane.

The organopolysiloxane which is the component (B) in the present invention is the curing agent for the silicone rubber composition, and this organopolysiloxane contains, on average, at least two (and typically 2 to 300), and preferably at least 3 (for example, 3 to 200) hydrogen atoms bonded to the silicon atom per molecule. The component (B) is not particularly limited for its molecular structure, and component (B) may have a straight chain structure, a branched structure, a cyclic structure, or a dendric structure in three dimensional network. Examples of the organic group bonded to the silicon atom in the component (B) include optionally halogenated monovalent hydrocarbon groups containing about 1 to 10 carbon atoms, and preferably about 1 to 8 carbon atoms not including an aliphatic unsaturated bond, for example, alkyl groups such as methyl group, ethyl group, propyl group, butyl group, pentyl group, hexyl group, isopropyl group, isobutyl group, tert-butyl group, and cyclohexyl group; aryl groups such as phenyl group, tolyl group, and xylyl group; aralkyl groups such as benzyl group and phenethyl group; and halogenated alkyl groups such as 3-chloropropyl group and 3,3,3-trifluoro propyl group. The preferred is methyl group. The component (B) is not particularly limited for its viscosity. The viscosity at 25°C, however, is preferably in the range of 0.5 to 1,000,000 mPa·s, and more preferably 1 to 100,000 mPa·s. The organohydrogen polysiloxane of the component (B) may be the one having the number of silicon atoms per molecule (degree of polymerization) of about 2 to 500, and preferably about 3 to 300.

Example of such organopolysiloxane used for the component (B) include 1,1,3,3-tetramethyldisiloxane, 1,3,5,7-tetramethylcyclotetrasiloxane, methyl hydrogen cyclopolysiloxane, methyl hydrogen siloxane - dimethyl siloxane cyclic copolymer, tris(dimethyl hydrogen siloxy)methylsilane, tris(dimethyl hydrogen siloxy)phenylsilane, dimethylsiloxane - methyl hydrogen siloxane copolymer having both ends endcapped with dimethyl hydrogen siloxy group, methyl hydrogen polysiloxane having both ends endcapped with dimethyl hydrogen siloxy group, methyl hydrogen polysiloxane having both ends endcapped with trimethylsiloxy group, dimethylpolysiloxane having both ends endcapped with dimethyl hydrogen siloxy group, dimethylsiloxane - diphenylsiloxane copolymer having both ends endcapped with dimethyl hydrogen siloxy group, dimethylsiloxane - methyl hydrogen siloxane copolymer having both ends endcapped with trimethylsiloxy group, dimethylsiloxane - diphenylsiloxane - methyl hydrogen siloxane copolymer having both ends endcapped with trimethylsiloxy group, dimethyl siloxane - methyl hydrogen siloxane copolymer having both ends endcapped with dimethyl hydrogen siloxy group, a copolymer of H(CH₃)₂SiO_{1/2} unit and SiO₂ unit, a copolymer of H(CH₃)₂SiO_{1/2} unit, (CH₃)₃SiO_{1/2} unit, and SiO₂ unit, a mixture of two or more such organopolysiloxane.

In the silicone rubber composition, the component (B) is incorporated at an amount such that the molar ratio of the hydrogen atom bonded to the silicon atom in the component (B) to the alkenyl group in the component (A) is in the range of 0.01 to 20, preferably 0.1 to 10, and more preferably 0.1 to 5. The molar ratio of the hydrogen atom bonded to the silicon atom in the component (B) to the alkenyl group in the component (A) has been limited to such range because the silicone rubber composition having such ratio below the lower limit of such range tends to experience insufficient curing while the silicone rubber composition having such ratio in excess of such range tends invite loss of physical properties of the resulting silicone rubber.

The calcium carbonate powder having its surface treated with a paraffin compound which constitutes the component (C) is the component incorporated for improving the adhesion property of the adhesive of the present invention, and this calcium carbonate powder has a specific surface area (as measured by air permeability) of up to 6 m²/g, and preferably up to 5 m²/g. Although the lower limit is not particularly limited, this calcium carbonate powder is typically incorporated at an amount of at least 0.1 m²/g. Examples of such calcium carbonate powder used for the component (C) include heavy (or dry pulverized) calcium carbonate powder and light (or precipitated) calcium carbonate powder, and the preferred is use of a heavy calcium carbonate powder.

In the present invention, the component (C) used is the calcium carbonate powder having its surface treated with a paraffin compound, and most preferably a heavy calcium carbonate powder having its surface treated with a paraffin compound. Accordingly, unlike untreated heavy calcium carbonate powder or the heavy calcium carbonate powder or the light calcium carbonate powder having its surface treated with an agent other than the paraffin compound such as a fatty acid or a resin acid, the component (C) does not act as a catalyst poison to the platinum catalyst, and the curing of the composition of the present invention is not adversely affected and the composition retains its excellent storage stability.

Examples of the paraffin compound used in the surface treatment include a paraffin wax and a polyethylene wax represented by the molecular formula: -CH₃-(CH₂)ₙ-CH₃ wherein n is a positive integer of 16 to 40, and preferably 20 to 30. The paraffin compound is typically used at about 0.1 to 10 parts by weight, and preferably at about 0.5 to 5 parts by weight in relation to 100 parts by weight of the calcium carbonate powder used for the starting material.

The component (C) may be a calcium carbonate powder having its surface preliminarily treated with a paraffin compound. Alternatively, the surface treatment may be conducted in the course of preparing the composition of the present invention by mixing the calcium carbonate powder, and the paraffin compound, the component (A), and the component (B) typically at an elevated temperature of about 150 to 200°C before the incorporation of the hydrosilylation catalyst of the component (E) as described below. When the surface treatment is accomplished in the course of preparing the composition of the present invention, the surface treatment is preferably completed before the incorporation of the hydrosilylation catalyst of the component (E).

In the silicone rubber composition, the component (C) is typically incorporated at an amount of 1 to 200 parts by weight, preferably at 5 to 200 parts by weight, and most preferably 10 to 100 parts by weight in relation to 100 parts by weight of the component (A). The content of the component (C) has been limited to such range because the content below the lower limit of such range tends to results in the weaker adhesion of the resulting silicone rubber composition to the silicone rubber, while the content in excess of such range is likely to invite difficulty of preparing a homogeneous silicone rubber composition.

The component (D) is an inorganic powder of at least one member selected from quartz, aluminum hydroxide, diatomaceous earth, alumina, titanium dioxide, zinc oxide, iron oxide, magnesium carbonate, and carbon black. The component (D) is not particularly limited for its shape, and exemplary shapes include spherical, plate, and irregular shapes. The component (D) is also not particularly limited for its particle size, and the average particle size is preferably in the range of 0.1 to 50 µm. In the present invention, the average particle size can be measured as a cumulative weight average D₅₀ (or median diameter) in the measurement of particle size distribution by laser diffractometry.

In the silicone rubber composition, the component (D) is typically incorporated at an amount of 1 to 200 parts by weight, preferably at 5 to 200 parts by weight, and most preferably 10 to 100 parts by weight in relation to 100 parts by weight of the component (A). The content of the component (D) has been limited to such range because the content below the lower limit of such range tends to results in the weaker adhesion of the resulting silicone rubber composition to the silicone rubber, while the content in excess of such range is likely to invite difficulty of preparing a homogeneous silicone rubber composition.

The component (E) is a hydrosilylation catalyst for promoting the curing of the silicone rubber composition. Exemplary hydrosilylation catalysts of the component (E) include platinum catalyst, rhodium catalyst, iridium catalyst, palladium catalyst, and ruthenium catalyst, and the preferred is use of a platinum catalyst. Examples of such component (E) include platinum catalysts such as fine platinum powder, platinum black, chloroplatinic acid, platinum tetrachloride, alcohol-modified chloroplatinic acid, olefin complex of platinum, alkenyl siloxane complex of platinum, carbonyl complex of platinum, and powder of a thermoplastic organic resin such as methyl methacrylate resin, polycarbonate resin, polystyrene resin, and silicone resin containing such platinum catalyst; rhodium catalysts such as those represented by the formula: [Rh(O₂CCH₃)₂]₂, Rh(O₂CCH₃)₃, Rh₂(C₈H₁₅O₂)₄, Rh(C₅H₇O₂)₃, Rh(C₅H₇O₂)(CO)₂, Rh(CO)[Ph₃P](C₅H₇O), RhX₃[(R)₂S]₃, (R²₃P)₂Rh(CO)X, (R²₃P)₂Rh(CO)H, Rh₂X₂Y₄, HₐRh_{b}(En)_{c}Cl_{d}, or Rh[O(CO)R]₃₋ₙ(OH)ₙ wherein X is hydrogen atom, chlorine atom, bromine atom, or iodine atom; Y is an alkyl group such as methyl group or ethyl group, CO, C₈H₁₄, or 0.5 C₈H₁₂; R is an alkyl group, a cycloalkyl group, or an aryl group; R² is an alkyl group, an aryl group, an alkyloxy group, or an aryloxy group; En is an olefin; a is 0 or 1; b is 1 or 2; c is an integer of 1 to 4; d is 2, 3, or 4; and n is 0 or 1; and iridium catalysts such as those represented by the formula: Ir(OOCCH₃)₃, Ir(C₅H₇O₂)₃, [Ir(Z)(En)₂]₂, or [Ir(Z)(Dien)]₂ wherein Z is chlorine atom, bromine atom, iodine atom, or an alkoxy group, En is an olefin, and Dien is cyclooctadiene.

In the silicone rubber composition, the component (E) may be incorporated at a non-limited catalytic amount sufficient for catalyzing the curing of the silicone rubber composition. The component (E), however, is preferably incorporated at an amount such that the metal atom in the component (E) is in the range of 0.01 to 1,000 parts by weight, and most preferably 0.1 to 500 parts in relation to 1,000,000 parts by weight of the component (A).

The two part silicone rubber composition which cures by addition reaction of the present invention is constituted from the composition (I) containing the component (A), the component (C), the component (E), and the optional component (D) but not containing the component (B); and the composition (II) containing the component (A), the component (B), and the component (D) but not containing the component (C) and the component (E).

In the composition (I), the component (A) is preferably incorporated at an amount of 30 to 70% by weight, and in particular, at 40 to 60% by weight of the total amount of the component (A). The component (D) is preferably incorporated in the composition (I) at an amount of 0 to 60% by weight, and in particular, at 0 to 40% by weight of the total amount of the component (D). In the case of components (C) and (E), the entire component is incorporated in the composition (I). In the meanwhile, the residual content of the components (A) and component (D) and the entire content of the component (B) are incorporated the composition (II).

The composition (I) and/or the composition (II) may optionally contain a fine powder silica (F) in order to improve the physical properties of the resulting silicone rubber. Examples of the fine powder silica which is the component (F) include fumed silica, precipitated silica, calcined silica, and such amorphous silica powder having its surface treated with an organosilicon compound such as organoalkoxysilane, organohalosilane, organosilazane, and organopolysiloxane. In view of sufficiently improving the physical properties of the silicone rubber, the component (F) is preferably an amorphous silica powder having a BET specific surface area of at least 50 m²/g.

Content of the component (F) in the silicone rubber composition is not particularly limited. However, in view of improving the physical properties of the resulting silicone rubber, the component (F) is preferably incorporated at an amount of 0.1 to 100 parts by weight, and more preferably at 0.1 to 50 parts by weight in relation to 100 parts by weight of the component (A).

The component (F) is preferably incorporated in the composition (I) and/or the composition (II) by preliminarily mixing with the component (A) to form a base compound and incorporating this base compound in the composition (I) and/or the composition (II). In the course of such preparation, the surface of the component (F) may be treated in situ in the component (A) by adding an organosilicon compound such as organohalosilane and organosilazane to the base compound.

The amount of the component (F) incorporated in the compositions (I) and (II) may be adequately selected. Preferably, 30 to 70% by weight, and in particular, 40 to 60% by weight of the entire amount of the component (F) is incorporated in the composition (I), and the residue is incorporated in the composition (II).

The composition (I) and/or the composition (II) may also contain other optional components. Exemplary such components include wollastonite; talc; aluminite; calcium sulfate; magnesium carbonate; a clay such as kaolin; aluminum hydroxide; magnesium hydroxide; graphite; barite; copper carbonate such as malachite; nickel carbonate such as zarachite; barium carbonate such as witherite; strontium carbonate such as strontianite; silicate salts such as forsterite, sillimanite, mullite, pyrophyllite, kaolinite, and vermiculite; diatomaceous earth; non-reinforcement filler such as silver and nickel; and any of such filler having the surface treated with the organosilicon compound as described above.

The composition (I) and/or the composition (II) may also contain a tackifier for improving the adhesion of the composition to the silicone rubber. Exemplary such tackifiers include alkylalkenyldialkoxysilanes such as methylvinyldimethoxysilane, ethylvinyldimethoxysilane, methylvinyldiethoxysilane, and ethylvinyldiethoxysilane; alkylalkenyldioximesilanes such as methylvinyldioximesilane and ethylvinyldioxime silane; alkylalkenyldiacetoxysilanes such as methylvinyldiacetoxysilane and ethylvinyldiacetoxysilane; alkenylalkyldihydroxysilanes such as methylvinyldihydroxysilane and ethylvinyldihydroxysilane; organotrialkoxysilanes such as methyltrimethoxysilane, vinyltrimethoxysilane, allyltrimethoxysilane, 3-methacryloxypropyltrimethoxysilane, 3-glycidoxypropyltrimethoxysilane, 3-aminopropyltrimethoxysilane, N-(2-aminoethyl)-3-aminopropyltrimethoxysilane, bis(trimethoxysilyl) propane, and bis(trimethoxysilyl)hexane; isocyanurate compounds such as triallyl isocyanurate, diallyl(3-trimethoxy silyl) isocyanurate, tris(3-trimethoxysilylpropyl) isocyanurate, tris(3-triethoxysilylpropyl) isocyanurate, and tris(3-tripropoxysilylpropyl) isocyanurate; titanium compounds such as tetraethyl titanate, tetrapropyl titanate, tetrabutyl titanate, tetra(2-ethylhexyl) titanate, titanium ethylacetotate, and titanium acetylacetonate; aluminium compounds such as aluminum ethylacetoacetate diisopropylate, aluminum tris(ethylacetoacetate), aluminum alkylacetoacetate diisopropylate, aluminum tris(acetylacetonate), and aluminum monoacetylacetonate bis(ethylacetoacetate); and zirconium compounds such as zirconium acetylacetoante, zirconium butoxyacetylacetonate, zirconium bisacetylacetoante, and zirconium ethylacetoacetate. Content of such tackifier is not limited. However, the tackifier is preferably used at an amount in the range of 0.01 to 10 parts by weight in relation to 100 parts by weight of the component (A) in the silicone rubber composition.

Preferably, the composition (II) further contains a curing inhibitor in order to adjust curing speed of the silicone rubber composition to thereby improve workability. Examples of such curing inhibitor include acetylene compounds such as 2-methyl-3-butyne-2-ol, 3,5-dimethyl-l-hesyne-3-ol, and 2-phenyl-3-butyne-2-ol; enyne compounds such as 3-methyl-3-penten-1-yne and 3,5-dimethyl-3-hexen-1-yne; organosiloxane compounds containing at least 5% by weight of vinyl group per molecule such as 1,3-divinyl-1,1,3,3-tetramethyldisiloxane, 1,3-divinyl-1,1,3,3-tetraphenyldisiloxane, 1,3-divinyl-1,3-diphenyl-1,3-dimethyldisiloxane, 1,3,5,7-tetravinylcyclotetrasiloxane, 1,3,5,7-tetramethyl-1,3,5,7-tetrahexenylcyclotetrasiloxane, methylvinylsiloxane having both ends endcapped with silanol group, and methylvinylsiloxane - dimethylsiloxane copolymer having both ends endcapped with silanol group; triazoles such as benzotriazole; phosphines, mercaptans, and hydrazines. Content of such curing inhibitor is not limited. However, the curing inhibitor is preferably used at an amount in the range of 0.001 to 5 parts by weight in relation to 100 parts by weight of the component (A) in the silicone rubber composition.

The composition (I) and the composition (II) have a reduced difference in the viscosity, and accordingly, these compositions are mutually flowable. Therefore, the compositions (I) and (II) can be homogeneously mixed with a static mixing apparatus such as static mixer. In this case, the compositions (I) and (II) may preferably have a viscosity at 25°C as measured by a rotary viscometer of 50 to 1,000 Pa·s, and in particular, 200 to 400 Pa·s, and the initial difference in the viscosity (immediately after the preparation) of the compositions (I) and (II) is preferably within ±0 to 30%, and in particular, ±0 to 10% based on the viscosity of the composition (I). The composition (II) typically experiences increase in the viscosity of 0 to 30%, and in particular, 0 to 10% when stored at 70°C for 7 days.

In the adhesive of the present invention, the composition (I) and the composition (II) are preferably mixed at a substantially equal volume ratio, and more specifically, the composition (I) and the composition (II) are preferably mixed at a volume ratio of about 1 : 0.5 to 1 : 2, and in particular at about 1 : 0.75 to 1 : 1.25, more preferably at about 1 : 0.9 to 1 : 1.1, and most preferably at about 1 : 0.95 to 1 : 1.05.

The mixing apparatus used in mixing the composition (I) and the composition (II) is not limited to the static mixing apparatus such as static mixer, and other mixers known in the art such as planetary mixer and paddle mixer may also be used. Also, the conditions used for curing the two part silicone rubber composition which cures by addition reaction of the present invention is not particularly limited, and the composition may be cured under the conditions used for known silicone rubber compositions which cure by addition reaction. More specifically, the curing may be accomplished at room temperature, or with optional heating such as heating to 40 to 180°C for 1 to 60 minutes.

The two part adhesive for a silicone rubber which cures by addition reaction of the present invention contains a calcium carbonate powder, and when the two parts of the two part silicone rubber composition which cures by hydrosilylation are stored for a prolonged period, the composition containing the curing agent experiences a reduced change in the viscosity, and therefore, these two parts can be homogeneously mixed at a volume ratio of approximately 1 : 1 by a static mixing apparatus such as static mixer. Once cured, the composition of the present invention exhibits the designed physical properties of the silicone rubber and adhesion to the silicone rubber. Accordingly, the two part adhesive for a silicone rubber of the present invention is well adapted, for example, for use as an adhesive or a sealant at the part of adhesion or seam of an air bag produced by placing a fabric impregnated and/or coated with a silicone rubber over another such fabric with the coated surface in contact with each other, and adhering or sewing the periphery of the laminated fabric.

### EXAMPLES

Next, the two part silicone rubber composition which cures by addition reaction according to the present invention is described in further detail by referring to Examples and Comparative Examples which by no means limit the scope of the present invention. In the Examples, viscosity is the value measured at 25°C, and the properties of the silicone rubber are those measured by the procedure as described below.

### [Physical properties of the silicone rubber]

A silicone rubber composition was prepared by mixing the two parts of the two part silicone rubber composition which cures by addition reaction, and a silicone rubber was prepared by allowing the silicone rubber composition to stand at 25°C for 1 day for curing of the composition. The silicone rubber was evaluated for its hardness by type A durometer according to JIS K 6253. A dumbbell shape No. 3 test piece defined in JIS K 6251 was also prepared by allowing the silicone rubber composition to stand at 25°C for 1 day. This dumbbell shape test piece was evaluated for is tensile strength and elongation according to the method defined in JIS K 6251.

### [Adhesion to the silicone rubber]

A silicone rubber composition was prepared by mixing the two parts of the two part silicone rubber composition which cures by addition reaction, and adhesion of this silicone rubber composition to a silicone rubber was evaluated by the following procedure defined in JIS K 6854.

A silicone rubber composition was prepared by mixing the two parts of the two part silicone rubber composition which cures by addition reaction, and this silicone rubber composition was coated to a thickness of 0.6 mm on a nylon fabric having a width of 25 mm covered with a silicone rubber to a thickness of the silicone rubber composition layer of 30 g/m². The test piece was prepared by curing the composition at 25°C for 1 day. Next, this nylon tape coated with the silicone rubber was subjected to T peel test at 200 mm/minute to thereby evaluate adhesion of the silicone rubber composition to the silicone rubber.

### Example 1

84 parts by weight of dimethylpolysiloxane having both ends endcapped with dimethylvinylsiloxy group having a viscosity of 100,000 mPa·s and 30 parts by weight of fumed silica powder (NSX200 manufactured by Nippon Aerosil) having a BET specific surface area of 200 m²/g were uniformly mixed, and the mixture was stirred at an elevated temperature of 160°C under reduced pressure for 2 hours to thereby produce a base compound.

Next, composition (I) comprising 38 parts by weight of this base compound (10 parts by weight in terms of the fumed silica powder content); 26 parts by weight of a heavy calcium carbonate powder surface treated with a paraffin compound having a specific surface area as measured by air permeability test of 2.0 m²/g (MC Coat P-20 manufactured by Maruo Calcium); 36.4 parts by weight of dimethylpolysiloxane having both ends endcapped with dimethylvinylsiloxy group having a viscosity of 40,000 mPa·s; 1 part by weight of a mixture of diisopropoxy bis(acetylacetone) titanium and methyltrimethoxysilane at a weight ratio of 1 : 1; and a solution of 1,3-divinyltetramethyldisiloxane complex of platinum in 1,3-divinyl tetramethyl disiloxane (at an amount such that the metal platinum in the catalyst is 30 parts by weight in relation to 1,000,000 parts by weight of the dimethylpolysiloxane in the base compound) was prepared.

Next, composition (II) comprising 38 parts by weight of the base compound; 35.6 parts by weight of dimethylpolysiloxane having both ends endcapped with dimethylvinylsiloxy group having a viscosity of 40,000 mPa·s; 0.6 parts by weight of dimethylpolysiloxane having both end endcapped with dimethyhydrogensiloxy group having a viscosity of 1 mPa·s (the amount such that molar ratio of the hydrogen atom bonded to the silicon atom in this component to the total amount of the vinyl group in the vinyl group-containing dimethylpolysiloxane in the compositions (I) and (II) is 0.9); 0.2 parts by weight of dimethyl siloxane - methyl hydrogen siloxane copolymer having both end endcapped with trimethylsiloxy group having a viscosity of 150 mPa·s (having 6 hydrogen atoms on average bonded to the silicon atom per molecule) (the amount such that molar ratio of the hydrogen atom bonded to the silicon atom in this component to the total amount of the vinyl group in the vinyl group-containing dimethylpolysiloxane in the compositions (I) and (II) is 0.3); and 26 parts by weight of quartz powder (CRYSTALITE VX-S2 manufactured by Tatsumori) was prepared. The composition (II) was measured for its viscosity. The results are shown in Table 1.

The composition (I) and the composition (II) were mixed in a static mixer at a weight ratio of 1 : 1 (the volume ratio also being substantially 1 : 1) to produce the silicone rubber composition. The silicone rubber obtained by curing this silicone rubber composition was evaluated for its physical properties and adhesion. The results are shown in Table 1. The composition (I) and the composition (II) were also respectively aged at an elevated temperature of 70°C for 1 week. The composition (II) was evaluated for its viscosity after the aging at the elevated temperature, and then, the composition (I) and the composition (II) after the aging at the elevated temperature were mixed at a weight ratio of 1 : 1 (the volume ratio also being substantially 1 : 1) in a static mixer to prepare the silicone rubber composition. The silicone rubber obtained by curing this silicone rubber composition was evaluated for its physical properties and adhesion. The results are shown in Table 1.

### Comparative Example 1

The procedure of Example 1 was repeated except that the quartz powder in the composition (II) was replaced with 26 parts by weight of heavy calcium carbonate powder having its surface treated with a paraffin compound (MC Coat P-20 manufactured by Maruo Calcium) having a specific surface area as measured by air permeability test of 2.0 m²/g to produce composition (III). This composition (III) was evaluated for its viscosity, and the results are shown in Table 1. The composition (I) prepared in Example 1 and this composition (III) were mixed at a weight ratio of 1 : 1 (the volume ratio also being substantially 1 : 1) in a static mixer to prepare the silicone rubber composition. The silicone rubber obtained by curing this silicone rubber composition was evaluated for its physical properties and adhesion. The results are shown in Table 1. The composition (I) and the composition (III) were also respectively aged at an elevated temperature of 70°C for 1 week. The composition (III) was evaluated for its viscosity after the aging at the elevated temperature, and then, the composition (I) and the composition (III) after the aging at the elevated temperature were mixed at a weight ratio of 1 : 1 (the volume ratio also being substantially 1 : 1) in a static mixer to prepare the silicone rubber composition. The silicone rubber obtained by curing this silicone rubber composition was evaluated for its physical properties and adhesion. The results are shown in Table 1.

### Comparative Example 2

The procedure of Example 1 was repeated except that the quartz powder in the composition (II) was replaced with 26 parts by weight of heavy calcium carbonate powder without surface treatment (Super 2000 manufactured by Maruo Calcium) having a specific surface area as measured by air permeability test of 2.0 m²/g to produce composition (IV). The composition (I) prepared in Example 1 and this composition (IV) were mixed at a weight ratio of 1 : 1 (the volume ratio also being substantially 1 : 1) in a static mixer to prepare the silicone rubber composition. The silicone rubber obtained by curing this silicone rubber composition was evaluated for its physical properties and adhesion. The results are shown in Table 1. The composition (I) and the composition (IV) were also respectively aged at an elevated temperature of 70°C for 1 week. The composition (I) and the composition (IV) after the aging at the elevated temperature were mixed at a weight ratio of 1 : 1 (the volume ratio also being substantially 1 : 1) in a static mixer to prepare the silicone rubber composition. The silicone rubber obtained by curing this silicone rubber composition was evaluated for its physical properties and adhesion. The results are shown in Table 1.

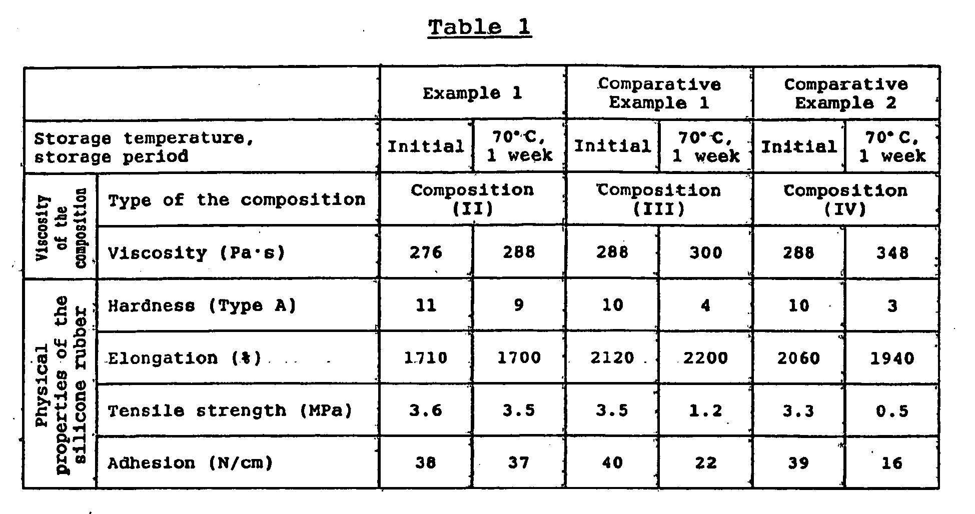

## Claims

1. A two part adhesive for a silicone rubber comprising composition (I) and composition (II) which cures by addition reaction when the composition (I) and the composition (II) are mixed at room temperature, wherein the adhesive comprises
(A) 100 parts by weight of a diorganopolysiloxane containing at least two alkenyl groups per molecule on average;
(B) an organopolysiloxane containing at least two hydrogen atoms bonded to the silicon atom per molecule on average at an amount such that molar ratio of the hydrogen atom bonded to the silicon atom to the alkenyl group in the component (A) is in the range of 0.01 to 20;
(C) 1 to 200 parts by weight of a calcium carbonate powder having its surface treated with a paraffin compound;
(D) 1 to 200 parts by weight of an inorganic powder of at least one member selected from quartz, aluminum hydroxide, diatomaceous earth, alumina, titanium dioxide, zinc oxide, iron oxide, magnesium carbonate, and carbon black; and
(E) a catalytic amount (amount capable of promoting the curing of the composition) of a hydrosilylation catalyst; and
the composition (I) comprises the component (A), the component (C), the component (E), and optionally the component (D) without containing the component (B); and the composition (II) comprises the component (A), the component (B), and the component (D) without containing the component (C) and the component (E).

2. A two part adhesive for a silicone rubber which cures by addition reaction according to claim 1, wherein component (C) is a heavy calcium carbonate powder having a specific surface area (as measured by air permeability test) of up to 6 m²/g.

3. A two part adhesive for a silicone rubber which cures by addition reaction according to claim 1 or 2, wherein the composition (I) and/or the composition (II) further comprises
(F) a fine powder silica having a specific surface area of 50 m²/g at an amount of 0.1 to 100 parts by weight in relation to 100 parts by weight of component (A).

4. A two part adhesive for a silicone rubber which cures by addition reaction according to claim 3, wherein the component (F) is preliminarily incorporated in the component (A) by mixing at an elevated temperature.

5. A two part adhesive for a silicone rubber which cures by addition reaction according to any one of claims 1 to 4, wherein the composition (I) and the composition (II) are mixed at a volume ratio of 1 : 0.5 to 1 : 2.

## Patentansprüche

1. Zweiteiliges Haftmittel für einen Silikongummi, umfassend Zusammensetzung (I) und Zusammensetzung (II), das durch Additionsreaktion härtet, wenn die Zusammensetzung (I) und die Zusammensetzung (II) bei Raumtemperatur gemischt werden, wobei
das Haftmittel umfasst
(A) 100 Gewichtsteile eines Diorganopolysiloxans, das im Durchschnitt mindestens zwei Alkenylgruppen pro Molekül enthält;
(B) ein Organopolysiloxan, das im Durchschnitt mindestens zwei an das Siliciumatom gebundene Wasserstoffatome pro Molekül enthält, in einer solchen Menge, dass das Molverhältnis der an das Siliciumatom gebundenen Wasserstoffatome zu der Alkenylgruppe in der Komponente (A) im Bereich von 0,01 bis 20 liegt;
(C) 1 bis 200 Gewichtsteile eines Calciumcarbonatpulvers, dessen Oberfläche mit einer Paraffinverbindung behandelt ist;
(D) 1 bis 200 Gewichtsteile eines anorganischen Pulvers mindestens eines Vertreters, gewählt aus Quarz, Aluminiumhydroxid, Diatomeenerde, Aluminiumoxid, Titandioxid, Zinkoxid, Eisenoxid, Magnesiumcarbonat und Ruß; und
(E) eine katalytische Menge (eine Menge, welche fähig ist, die Härtung der Zusammensetzung zu fördern) eines Hydrosilylierungskatalysators; und
wobei die Zusammensetzung (I) die Komponente (A), die Komponente (C), die Komponente (E) und wahlweise die Komponente (D) enthält, ohne die Komponente (B) zu enthalten; und die Zusammensetzung (II) die Komponente (A), die Komponente (B) und die Komponente (D) enthält, ohne die Komponente (C) und die Komponente (E) zu enthalten.

2. Zweiteiliges, durch Additionsreaktion härtendes Haftmittel für einen Silikongummi nach Anspruch 1, wobei die Komponente (C) ein schweres Calciumcarbonatpulver ist mit einer spezifischen Oberfläche (gemessen mittels eines Luftpermeabilitäts-Tests) von bis zu 6 m²/g.

3. Zweiteiliges, durch Additionsreaktion härtendes Haftmittel für einen Silikongummi nach Anspruch 1 oder 2, wobei die Zusammensetzung (I) und/oder die Zusammensetzung (II) weiterhin umfasst
(F) ein feinpulvriges Silica mit einer spezifischen Oberfläche von 50 m²/g in einer Menge von 0,1 bis 100 Gewichtsteilen in Bezug auf 100 Gewichtsteile der Komponente (A).

4. Zweiteiliges, durch Additionsreaktion härtendes Haftmittel für einen Silikongummi nach Anspruch 3, wobei die Komponente in (F) vorausgehend in die Komponente (A) durch Mischen bei einer erhöhten Temperatur eingebracht wird.

5. Zweiteiliges, durch Additionsreaktion härtendes Haftmittel für einen Silikongummi nach mindestens einem der Ansprüche 1 bis 4, wobei die Zusammensetzung (I) und die Zusammensetzung (II) in einem Volumenverhältnis von 1 : 0,5 bis 1 : 2 gemischt sind.

## Revendications

1. Adhésif en deux parties pour un caoutchouc en silicone comprenant une composition (I) et une composition (II), qui est traité par réaction d'addition quand la composition (I) et la composition (II) sont mélangées à la température ambiante, dans lequel l'adhésif comprend
(A) 100 parties en poids d'un diorganopolysiloxane contenant au moins deux groupes alcényle par molécule en moyenne ;
(B) un organopolysiloxane contenant au moins deux atomes d'hydrogène liés à l'atome de silicium par molécule en moyenne dans une quantité telle que le rapport molaire de l'atome d'hydrogène lié à l'atome de silicium au groupe alcényle dans le composant (A) est dans la gamme de 0,01 à 20 ;
(C) 1 à 200 parties en poids d'une poudre de carbonate de calcium ayant sa surface traitée avec un composé paraffine ;
(D) 1 à 200 parties en poids d'une poudre minérale d'au moins un membre sélectionné parmi le quartz, l'hydroxyde d'aluminium, la terre de diatomées, l'alumine, le dioxyde de titane, l'oxyde de zinc, l'oxyde de fer, le carbonate de magnésium, et le noir de carbone ; et
(E) une quantité catalytique (quantité capable de promouvoir le traitement de la composition) d'un catalyste d'hydrosilylation ;
et
la composition (I) comprend le composant (A), le composant (C), le composant (E), et éventuellement le composant (D) sans contenir le composant (B) ; et la composition (II) comprend le composant (A), le composant (B), et le composant (D) sans contenir le composant (C) et le composant (E).

2. Adhésif en deux parties pour un caoutchouc en silicone qui est traité par réaction d'addition selon la revendication 1, dans lequel le composant (C) est une poudre de carbonate de calcium lourde présentant une aire spécifique (telle que mesurée par le test de perméabilité à l'air) allant jusqu'à 6 m²/g.

3. Adhésif en deux parties pour un caoutchouc en silicone qui est traité par réaction d'addition selon la revendication 1 ou la revendication 2, dans lequel la composition (I) et/ou la composition (II) comprend en outre
(F) une silice en poudre fine présentant une aire spécifique de 50 m²/g dans une quantité de 0,1 à 100 parties en poids par rapport à 100 parties en poids de composant (A).

4. Adhésif en deux parties pour un caoutchouc en silicone qui est traité par réaction d'addition selon la revendication 3, dans lequel le composant (F) est incorporé de manière préliminaire dans le composant (A) en mélangeant à une température élevée.

5. Adhésif en deux parties pour un caoutchouc en silicone qui est traité par réaction d'addition selon l'une quelconque des revendications 1 à 4, dans lequel la composition (I) et la composition (II) sont mélangées dans un rapport volumétrique de 1 : 0,5 à 1 : 2.
